# EUROPÄISCHE PATENTSCHRIFT

(11) **EP 1 254 400 B1**
(45) Veröffentlichungstag und Bekanntmachung des Hinweises auf die Patenterteilung: **08.10.2003**
(21) Anmeldenummer: 00988790.2
(22) Anmeldetag: 13.12.2000
(51) Int. Cl.: G05B 9/02

(54) **SCHALTUNGSANORDNUNG ZUM SICHEREN ABSCHALTEN EINER ANLAGE, INSBESONDERE EINER MASCHINENANLAGE**
CIRCUIT ARRANGEMENT FOR THE SAFE SHUTDOWN OF AN INSTALLATION, IN PARTICULAR A MACHINE INSTALLATION
CIRCUIT POUR L'ARRET SUR D'UNE INSTALLATION, EN PARTICULIER D'UNE MACHINE

(30) Priorität: 23.12.1999 DE 19962497
(43) Veröffentlichungstag der Anmeldung: 06.11.2002
(73) Patentinhaber: PILZ GmbH & CO., 73760 Ostfildern (DE)
(72) Erfinder: VEIL, Richard, 70597 Stuttgart (DE); RUPP, Roland, 73110 Hattenhofen (DE); BODE, Holger, 68535 Edingen-Neckarhausen (DE)
(74) Vertreter: Duhme, Torsten
(86) Internationale Anmeldenummer: EP0012632
(87) Internationale Veröffentlichungsnummer: WO01048570

(56) Entgegenhaltungen:
- EP-A- 0 380 314
- EP-A- 0 706 024
- DE-A- 19 805 518
- US-A- 4 063 181

## Beschreibung

Die vorliegende Erfindung betrifft eine Schaltungsanordnung zum sicheren Abschalten einer Anlage, insbesondere einer Maschinenanlage, mit einem Meldegerät, das in Abhängigkeit von einem Betriebszustand der Anlage ein definiertes Ausgangssignal erzeugt, und mit einem Sicherheitsschaltgerät, das in Abhängigkeit von dem definierten Ausgangssignal die Anlage fehlersicher abschaltet, wobei das definierte Ausgangssignal im Betrieb der Anlage über eine Zeitdauer T₁ einen statischen Signalwert aufweist.

Die Erfindung betrifft des weiteren ein Sicherheitsschaltgerät zur Verwendung in einer solchen Schaltungsanordnung, mit zumindest einem Eingang zum Anschließen eines Meldegerätes und mit einer Abschalteinheit, die in Abhängigkeit eines von dem Meldegerät erzeugten, definierten Ausgangssignals einen fehlersicheren Abschaltvorgang auslöst.

Eine solche Schaltungsanordnung sowie ein solches Sicherheitsschaltgerät sind beispielsweise aus dem Buch "Maschinensicherheit" von Winfried Gräf, erschienen 1997 im Hüthig-Verlag, Seite 204, 205 bekannt.

In der bekannten Schaltungsanordnung ist das Meldegerät eine Sicherheitslichtschranke, mit der beispielsweise der Gefahrenbereich einer Pressenanlage oder eines automatisierten Bearbeitungszentrums abgesichert werden kann. Die Sicherheitslichtschranke erzeugt hierzu ein Ausgangssignal, das von einem ersten Signalzustand zu einem zweiten Signalzustand wechselt, wenn einer oder mehrere Lichtstrahlen der Lichtschranke durchbrochen werden. Dieser Wechsel wird von dem angeschlossenen Sicherheitsschaltgerät erkannt und das Sicherheitsschaltgerät löst daraufhin auf eine fehlersichere Art und Weise einen Abschaltvorgang in der überwachten Anlage aus. Der Abschaltvorgang kann beinhalten, daß die überwachte Anlage insgesamt stromlos geschaltet wird. In vielen praktischen Anwendungsfällen ist es jedoch bereits ausreichend, daß nur ein Teil der Anlage, beispielsweise ein Antrieb, abgeschaltet wird.

Eine fehlersichere Abschaltung erfordert, daß die Schaltungsanordnung insgesamt so ausgebildet ist, daß auch im Fall eines Fehlers innerhalb der Schaltungsanordnung eine Gefährdung durch die Anlage ausgeschlossen ist. Dies wird vor allem dadurch erreicht, daß sowohl das Meldegerät als auch das Sicherheitsschaltgerät fehlersichernde Maßnahmen beinhalten, wie beispielsweise mehrkanalige, diversitäre Signalwege und/oder wiederholt durchgeführte Eigentests.

Die vorliegende Erfindung ist nicht allein auf Lichtschranken als Meldegeräte beschränkt. Weitere Beispiele für Meldegeräte sind Türkontaktschalter, Not-Aus-Taster und generell jegliche Art von Sensoren, mit denen ein sicherheitskritischer Betriebszustand einer überwachten Anlage detektiert werden kann.

Grundsätzlich lassen sich solche Meldegeräte heute in zwei Arten unterscheiden. Bei der einen Art besitzen die Meldegeräte einen kontaktbehafteten Ausgang. Dies ist im wesentlichen ein Schalter, dessen Öffnungs- bzw. Schließstellung von dem Meldegerät beeinflußt ist. Ein kontaktbehafteter Ausgang kann von dem nachfolgenden Sicherheitsschaltgerät ausgewertet werden, indem ihm ein von ihm selbst erzeugtes Prüfsignal über den Kontaktschalter schleifenförmig zurückgeführt wird. Durch Vergleich des selbst erzeugten Prüfsignals mit dem zurückgeführten Eingangssignal ergibt sich, ob der kontaktbehaftete Ausgang des Meldegerätes offen oder geschlossen ist. Verallgemeinert läßt sich sagen, daß der Ausgang des Meldegerätes in diesem Fall über eine Schleifenverbindung mit dem Sicherheitsschaltgerät verbunden wird, wobei das Meldegerät selbst kein aktives Ausgangssignal erzeugt.

Demgegenüber besitzt die zweite Gruppe von Meldegeräten aktive Signalausgänge, und zwar in der Regel in Form von Halbleiter-Ausgängen. Dies bedeutet, daß das Meldegerät unabhängig von dem Sicherheitsschaltgerät ein Strom- und/oder Spannungssignal erzeugt, das den Betriebszustand der überwachten Anlage anzeigt. Bei der bekannten Schaltungsanordnung aus dem Buch von Gräf handelt es sich beispielsweise um eine Lichtschranke mit einem solchen Halbleiter-Ausgang.

Bei vielen Meldegeräten besteht das Problem, daß sie im Normalbetrieb der zu überwachenden Anlage nur vergleichsweise selten aktiviert werden, so daß der Ausgang des Meldegerätes über sehr lange Zeiträume hinweg statisch in einem Signalzustand verbleibt. Aus Sicht des Schaltgerätes ist in einem solchen Fall nicht erkennbar, ob dieser statische Signalzustand dem tatsächlichen Betriebszustand der Anlage entspricht oder ob er auf einen Fehler, beispielsweise einen zwischenzeitlich aufgetretenen Kurzschluß zwischen isolierten Leitungen zurückzuführen ist. Bei Meldegeräten mit kontaktbehafteten Ausgängen ist es daher bekannt, daß das Sicherheitsschaltgerät in periodischen Zeitabständen das in der Signalschleife geführte Prüfsignal ändert. Mit diesen determinierten Signalwechseln kann das Sicherheitsschaltgerät sowohl die Verbindung über den Ausgangskontakt des Meldegerätes als auch seine eigenen Signalverarbeitungspfade auf Fehlerfreiheit hin überprüfen. Eine solche Anordnung ist beispielsweise aus der DE 195 10 332 A1 bekannt.

Dieses Verfahren ist jedoch bei Meldegeräten mit aktiven, nicht-kontaktbehafteten Signalausgängen nicht anwendbar, da das Ausgangssignal in diesem Fall nicht von dem Sicherheitsschaltgerät selbst kontrolliert wird. Aus diesem Grund besitzen einige in der Praxis verwendete Meldegeräte mit aktivem Signalausgang einen zusätzlichen Testeingang, über den das Sicherheitsschaltgerät eine determinierte Zustandsänderung des Ausgangssignals zu Testzwecken anfordern kann. Ein Beispiel hierfür ist die Sicherheitslichtschranke FGS der Firma Sick AG aus 40549 Düsseldorf, Deutschland. Zur Durchführung einer Funktionskontrolle ist das Sicherheitsschaltgerät in diesen Fällen jedoch stets auf eine Kooperation mit dem Meldegerät angewiesen, was die Interoperabilität mit verschiedenen Meldegeräten einschränkt.

Des weiteren sind aufgrund ihrer Verwendung Meldegeräte mit aktiven Signalausgängen bekannt, die intern eigene Fehlerkontrollmaßnahmen durchführen. Hierbei erzeugt das Meldegerät in definierten Zeitabständen von sich aus kurze Signalwechsel an seinem Ausgang. Da diese Signalwechsel jedoch ebenfalls nicht unter Kontrolle des nachfolgenden Sicherheitsschaltgerätes stehen, sind sie für einen vom verwendeten Meldegerät unabhängigen Selbsttest des Sicherheitsschaltgerätes nicht geeignet.

Es ist daher eine Aufgabe der vorliegenden Erfindung, eine alternative Schaltungsanordnung anzugeben, bei der das Sicherheitsschaltgerät unabhängig von dem verwendeten Meldegerät einen Selbsttest seiner Signalwege durchführen kann. Es ist des weiteren eine Aufgabe der Erfindung, ein entsprechendes Sicherheitsschaltgerät anzugeben.

Diese Aufgabe wird bei einer Schaltungsanordnung der eingangs genannten Art dadurch gelöst, daß das Sicherheitsschaltgerät einen Taktgenerator zum Erzeugen eines bevorzugt periodischen Taktsignals sowie eine Eingangsstufe aufweist, die das Ausgangssignal des Meldegerätes mit dem Taktsignal moduliert.

Die Aufgabe wird des weiteren durch ein Sicherheitsschaltgerät der eingangs genannten Art gelöst, das einen Taktgenerator zum Erzeugen eines bevorzugt periodischen Taktsignals sowie eine Eingangsstufe aufweist, die das Ausgangssignal des Meldegerätes mit dem Taktsignal moduliert.

Durch die Modulation wird das Taktsignal, das unter der Kontrolle des Sicherheitsschaltgerätes steht, mit dem Ausgangssignal des Meldegerätes kombiniert. Dies geschieht bei einer Modulation so, daß der Informationsgehalt des definierten Ausgangssignals und des periodischen Taktsignals gemeinsam in dem modulierten Ausgangssignal enthalten ist. Dabei weist das modulierte Ausgangssignal aufgrund des Taktsignals bevorzugt periodische Signalwechsel auf, die es dem Sicherheitsschaltgerät ermöglichen, im laufenden Betrieb der Anlage eine eigenständige, interne Funktionskontrolle seiner Signalwege durchzuführen. Dies kann unabhängig von dem Ausgangssignal und infolgedessen auch unabhängig von einer Kooperation mit dem vorhergehenden Meldegerät geschehen. Trotzdem ist das Sicherheitsschaltgerät aufgrund des ihm bekannten Taktsignals stets in der Lage, etwaige Signalwechsel des definierten Ausgangssignals zu erkennen.

Die erfindungsgemäße Anordnung besitzt somit den Vorteil, daß das Sicherheitsschaltgerät eine interne Funktionskontrolle unabhängig von dem vorhergehenden Meldegerät durchführen kann, und zwar auch dann, wenn das vorhergehende Meldegerät einen aktiven Signalausgang besitzt. Eine Einbeziehung des Meldegerätes in den Selbsttest, beispielsweise die Anforderung eines Testsignals von dem Meldegerät, ist nicht mehr erforderlich. Das erfindungsgemäße Sicherheitsschaltgerät kann daher mit beliebigen Meldegeräten zu der erfindungsgemäßen Schaltungsanordnung kombiniert werden.

Darüber hinaus besitzen die erfindungsgemäße Schaltungsanordnung sowie das entsprechende Sicherheitsschaltgerät eine Reihe von weiteren Vorteilen, die nachfolgend vor allem im Hinblick auf bevorzugte Ausgestaltungen erläutert werden.

In einer ersten Ausgestaltung der erfindungsgemäßen Schaltungsanordnung schaltet das Sicherheitsschaltgerät die Anlage in Abhängigkeit von dem modulierten Ausgangssignal ab.

Alternativ zu dieser Maßnahme wäre es grundsätzlich auch denkbar, das modulierte Ausgangssignal nur ergänzend für den Selbsttest des Sicherheitsschaltgerätes heranzuziehen, während für die eigentliche Überwachung des Betriebszustandes der Anlage weiterhin nur das definierte, nicht-modulierte Ausgangssignal verwendet wird. Die genannte Maßnahme besitzt demgegenüber den Vorteil, daß das modulierte Ausgangssignal exakt denjenigen Signalweg durchläuft, auf den es bei der internen Funktionskontrolle des Sicherheitsschaltgerätes ankommt. Hierdurch vereinfacht sich zum einen der Aufwand und zum anderen ist so eine weitgehend lückenlose und kontinuierliche Funktionskontrolle möglich.

In einer weiteren Ausgestaltung ist das definierte Ausgangssignal ein digitales Signal und die Eingangsstufe weist eine Logikeinheit auf, die das definierte Ausgangssignal mittels einer logischen Verknüpfung mit dem Taktsignal moduliert.

Diese Maßnahme ist im Vergleich zu einer analogen Signalverarbeitung, beispielsweise mit Hilfe eines Mischers, sehr einfach und kostengünstig realisierbar. Zudem ist zu erwarten, daß zukünftige Meldegeräte in der Regel digitale Ausgangssignale liefern, deren Auswertung aufgrund dieser Maßnahme trotz der Modulation sehr leicht möglich ist.

In einer weiteren Ausgestaltung der zuvor genannten Maßnahme ist die logische Verknüpfung eine Äquivalenz- oder eine Antivalenz-Verknüpfung.

Diese beiden Verknüpfungen besitzen im Vergleich zu anderen logischen Verknüpfungen, beispielsweise einer UND-Verknüpfung, den Vorteil, daß das Taktsignal in dem modulierten Ausgangssignal weitgehend erhalten bleibt. Es findet hierbei lediglich in Abhängigkeit von dem Signalpegel des definierten Ausgangssignals eine Invertierung oder Nicht-Invertierung des Taktsignals statt. Infolgedessen weist das modulierte Ausgangssignal dieselben Signalwechsel wie das Taktsignal auf. Hierdurch ist eine kontinuierliche Funktionskontrolle auch im passiven Zustand der Anlage sehr leicht möglich.

In einer weiteren Ausgestaltung der Erfindung weist die Eingangsstufe Signalverarbeitungsmittel auf, die das Taktsignal und das modulierte Ausgangssignal fehlersicher voneinander trennen.

Eine derartige Trennung der beiden Signale läßt sich technisch auf unterschiedliche Weise realisieren, was nachfolgend anhand weiterer Ausgestaltungen der Erfindung erläutert ist. Insgesamt besitzt die Maßnahme den Vorteil, daß hierdurch eine Verwechslung des Taktsignals einerseits und des modulierten Ausgangssignals andererseits ausgeschlossen wird. Infolgedessen wird durch diese Maßnahme die Sicherheit der Schaltungsanordnung beträchtlich erhöht, da ein unerkannter, fehlerhafter Querschluß zwischen dem Taktsignal und dem modulierten Ausgangssignal vermieden ist.

In einer Ausgestaltung der zuvor genannten Maßnahme trennen die Signalverarbeitungsmittel das Taktsignal und das modulierte Ausgangssignal galvanisch voneinander.

Durch eine galvanischen Trennung ist ein Kurz- oder Querschluß zwischen den beiden Signalen nach einer einmal erfolgten, fehlerfreien Inbetriebnahme auf einfache und fehlersichere Art und Weise ausgeschlossen. Es genügt hier somit, die fehlerfreie Funktion der Schaltung einmal vor oder zu Beginn der ersten Inbetriebnahme zu überprüfen. Ein späterer betriebsbedingter Querschluß, beispielsweise infolge eines Bauteildefektes wie ein Durchlegieren eines Transistors, ist hier nicht möglich.

In einer weiteren Ausgestaltung der zuvor genannten Maßnahme trennen die Signalverarbeitungsmittel das Taktsignal und das modulierte Ausgangssignal mittels eines Optokopplers galvanisch voneinander.

Im Vergleich zu anderen Möglichkeiten zur Realisierung einer galvanischen Trennung ist ein Optokoppler sehr kostengünstig und raumsparend und er besitzt zudem den Vorteil, daß er unempfindlich ist gegenüber elektromagnetischen Störungen. Auch von ihm selbst gehen keine oder nur vergleichsweise geringe elektromagnetische Störungen aus.

In einer weiteren Ausgestaltung verändern die Signalverarbeitungsmittel zumindest einen Signalparameter des modulierten Ausgangssignals verschieden von dem Taktsignal.

Signalparameter im Sinne dieser Ausgestaltung der Erfindung können beispielsweise die Amplitude, die Phasenlage oder auch die Anzahl der Impulse pro Zeiteinheit des jeweiligen Signals sein. Indem die Signalverarbeitungsmittel einen solchen Signalparameter eines der beiden genannten Signale verschieden von dem anderen verändern, erzeugen sie ein Unterscheidungsmerkmal, anhand dessen eine Auswerteeinheit zuverlässig erkennen kann, welches der beiden Signale tatsächlich vorliegt. Dabei kann diese Maßnahme ergänzend oder alternativ zu den zuvor genannten Maßnahmen verwendet werden. Insgesamt erhöhen sich hierdurch die Gestaltungsmöglichkeiten bei der Entwicklung einer erfindungsgemäßen Schaltungsanordnung. Auch kann auf diese Weise ggf. auf die Verwendung von Bauelementen mit einer galvanischen Trennung verzichtet werden.

In einer weiteren Ausgestaltung der Erfindung weist das Sicherheitsschaltgerät ein Gehäuse mit von außen zugänglichen Anschlußklemmen auf und das Taktsignal ist der Eingangsstufe über eine der Anschlußklemmen von außen zugeführt.

Alternativ zu dieser Maßnahme ist es grundsätzlich auch denkbar, das Taktsignal der Eingangsstufe innerhalb des Gehäuses des Sicherheitsschaltgerätes zuzuführen. Bei der hier bevorzugten Ausgestaltung wird das Taktsignal der Eingangsstufe jedoch über eine aus dem Gehäuse herausgeführte Schleifenverbindung zugeführt. Die Maßnahme besitzt den Vorteil, daß hierdurch auch Meldegeräte mit kontaktbehafteten Signalausgängen sehr einfach an das erfindungsgemäße Sicherheitsschaltgerät angeschlossen werden können, ohne daß hierzu eine Veränderung des Sicherheitsschaltgerätes selbst notwendig ist. Es genügt in diesem Fall, das Taktsignal über den Kontakt eines solchen Meldegerätes zu führen, wenn man gleichzeitig den Eingang zum Anschluß eines Meldegerätes mit aktivem Signalausgang auf einen konstanten Signalpegel legt. Insgesamt wird aufgrund dieser Maßnahme die Verwendungsbreite des erfindungsgemäßen Sicherheitsschaltgerätes beträchtlich erhöht.

In einer weiteren Ausgestaltung der Erfindung weist das Sicherheitsschaltgerät zumindest zwei voneinander trennbare Gehäusemodule auf, wobei die Eingangsstufe eigenständig in einem der trennbaren Gehäusemodule angeordnet ist.

Diese Maßnahme besitzt den Vorteil, daß die Eingangsstufe des Sicherheitsschaltgerätes modular nach Bedarf verwendet werden kann, wodurch sich die Verwendungsbreite des erfindungsgemäßen Sicherheitsschaltgerätes ebenfalls erhöht. Außerdem ist es hierdurch auf einfache Weise möglich, ältere Sicherheitsschaltgeräte in der erfindungsgemäßen Weise nachzurüsten.

In einer weiteren Ausgestaltung der Erfindung weist die Eingangsstufe eine Filterschaltung auf, mit der Impulse unterdrückbar sind, deren Zeitdauer kürzer ist als eine kürzeste Pulsdauer des Taktsignals.

Diese Maßnahme besitzt den Vorteil, daß das erfindungsgemäße Sicherheitsschaltgerät vor Störungen geschützt ist, die in Form von kurzzeitigen, nicht determiniert auswertbaren Impulsen an den Signaleingängen anliegen. Solche Impulse sind beispielsweise Testimpulse, die einige neuere Meldegeräte, beispielsweise einige Lichtschranken, erzeugen, um eigene Funktionstests durchzuführen. Das erfindungsgemäße Sicherheitsschaltgerät wird aufgrund der genannten Maßnahme unempfindlich gegenüber solchen Störungen und ist daher unabhängig von dem Vorhandensein derartiger Testimpulse mit beliebigen Meldegeräten kombinierbar.

In einer weiteren Ausgestaltung wird das Taktsignal von einer Auswerteeinheit des Sicherheitsschaltgerätes gesteuert.

Diese Maßnahme besitzt den Vorteil, das die Auswerteeinheit die vollständige Kontrolle über das Taktsignal erhält. Eine Differenz zwischen dem Taktsignal, das zur Modulation des definierten Ausgangssignals verwendet wird, und dem Taktsignal, das der Auswerteeinheit bekannt ist, ist daher weitgehend ausgeschlossen.

In einer weiteren Ausgestaltung der Erfindung ist zumindest die Eingangsstufe des Sicherheitsschaltgerätes mehrkanalig aufgebaut.

Aufgrund dieser Maßnahme wird eine nochmals verbesserte Fehlersicherheit erreicht, da durch einen Vergleich oder eine gegenseitige Überprüfung der zumindest zwei Kanäle eine zusätzliche Funktionskontrolle möglich ist.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein erstes Ausführungsbeispiel einer erfindungsgemäßen Schaltungsanordnung, wobei die Eingangsstufe des Sicherheitsschaltgerätes in einem abgetrennten Gehäusemodul angeordnet ist,
- Fig. 2: den Aufbau der Eingangsstufe aus Fig. 1,
- Fig. 3: ein zweites Ausführungsbeispiel der Erfindung und
- Fig. 4: die zeitlichen Zusammenhänge zwischen dem definierten Ausgangssignal, dem Taktsignal und dem modulierten Ausgangssignal.

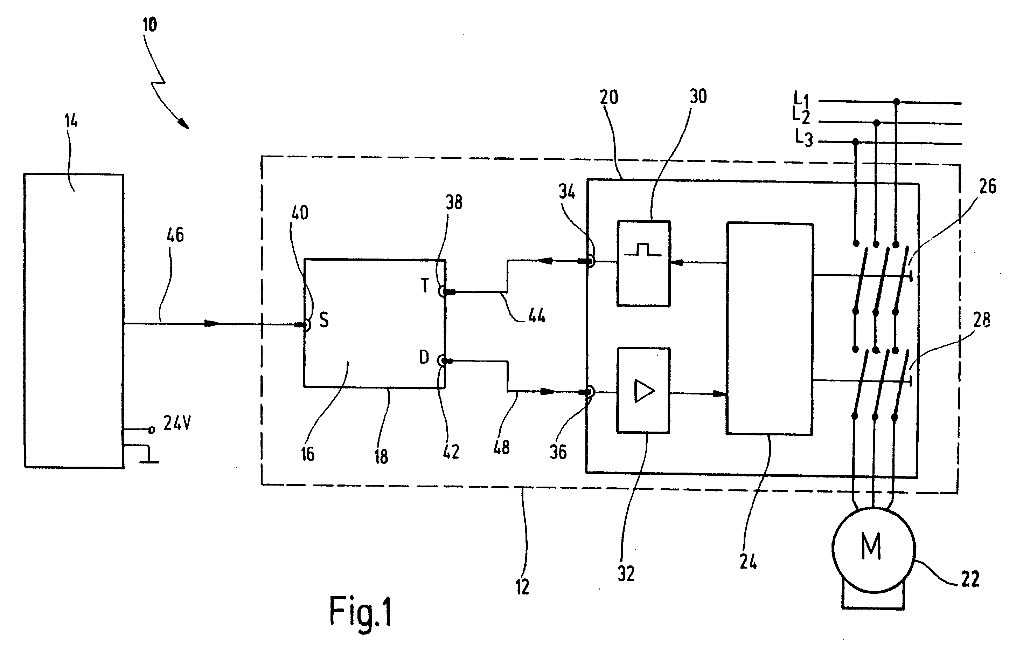

In Fig. 1 ist eine erfindungsgemäße Schaltungsanordnung in ihrer Gesamtheit mit der Bezugsziffer 10 bezeichnet.

Die Schaltungsanordnung 10 besteht im vorliegenden Fall aus einem Sicherheitsschaltgerät 12 sowie einem Meldegerät 14. Als Meldegerät 14 ist hier beispielhaft eine Lichtschranke angenommen, generell kann es sich hierbei jedoch um einen beliebigen Sensor handeln, der ein charakteristisches Ausgangssignal für den Betriebszustand einer zu überwachenden Anlage erzeugt.

Das Sicherheitsschaltgerät 12 weist eine Eingangsstufe 16 auf, die eigenständig in einem Gehäusemodul 18 angeordnet ist. Die weiteren Bestandteile des Sicherheitsschaltgerätes 12 sind in einem zweiten Gehäusemodul 20 angeordnet, das von dem Gehäusemodul 18 trennbar ist.

Mit der Bezugsziffer 22 ist eine Maschinenanlage bezeichnet, deren Betriebszustand mit der Schaltungsanordnung 10 überwacht wird. Hierzu gehören nicht nur Maschinenparameter im engeren Sinne, wie beispielsweise eine Maschinendrehzahl, sondern auch mit der Maschinenanlage 22 im weiteren Sinne zusammenhängende Zustandsgrößen, wie beispielsweise die Stellung eines Not-Aus-Tasters, die Öffnungs- oder Schließstellung einer Schutztür oder das Zustandssignal der Lichtschranke 14, die zur Absicherung eines Gefahrenbereichs der Maschinenanlage 22 dient.

Darüber hinaus ist die Erfindung nicht allein auf Maschinenanlagen, wie beispielsweise eine hydraulische Presse oder ein Bearbeitungszentrum, beschränkt. Bei der zu überwachenden Anlage kann es sich ganz allgemein auch um eine chemische Produktionsanlage oder einen beliebigen Prozeß handeln, der beim Auftreten eines Fehlers in einen sicheren Zustand überführt werden muß. Der sichere Zustand wird bei der hier beispielhaft angenommenen Maschinenanlage 22 durch Abschalten der Stromversorgung erreicht.

Der in dem Gehäusemodul 20 angeordnete Teil des Sicherheitsschaltgerätes 12 besitzt in an sich bekannter Weise eine Auswerte- und Abschalteinheit 24, die bevorzugt zweikanalig und diversitär aufgebaut ist. Die Auswerte- und Abschalteinheit 24 besitzt in ebenfalls bekannter Weise Ausgangsrelais oder Ausgangsschütze, deren Arbeitskontakte 26, 28 seriell in die Stromversorgung der Maschinenanlage 22 geschaltet sind.

Mit der Bezugsziffer 30 ist ein Taktgenerator bezeichnet, dessen Taktsignal von der Auswerte- und Abschalteinheit 24 gesteuert wird.

Mit der Bezugsziffer 32 ist ein Verstärker bezeichnet, der hier symbolisch für sämtliche erforderlichen Maßnähmen wie Pegelanpassung, Impulsformung und/oder Impedanzanpassung steht. Auch eine Rückwirkungsfreiheit von der Auswerte- und Abschalteinheit 24 auf die Eingangsstufe 16 wird hierdurch erreicht.

Das Gehäusemodul 20 besitzt in an sich bekannter Weise eine Reihe von Anschlußklemmen, von denen hier zwei mit den Bezugsziffern 34 und 36 bezeichnet sind. Ebenso besitzt das Gehäusemodul 18 mit der Eingangsstufe 16 Anschlußklemmen, die mit den Bezugsziffern 38, 40 und 42 bezeichnet sind. Über die Anschlußklemmen 34, 38 ist die Eingangsstufe 16 mit dem Taktgenerator 30 innerhalb des Gehäusemoduls 20 verbunden. Sie erhält hierüber das Taktsignal 44, das hier bevorzugt ein periodisches Taktsignal ist. Grundsätzlich kann das Taktsignal 44 jedoch auch ein asynchrones Signal sein.

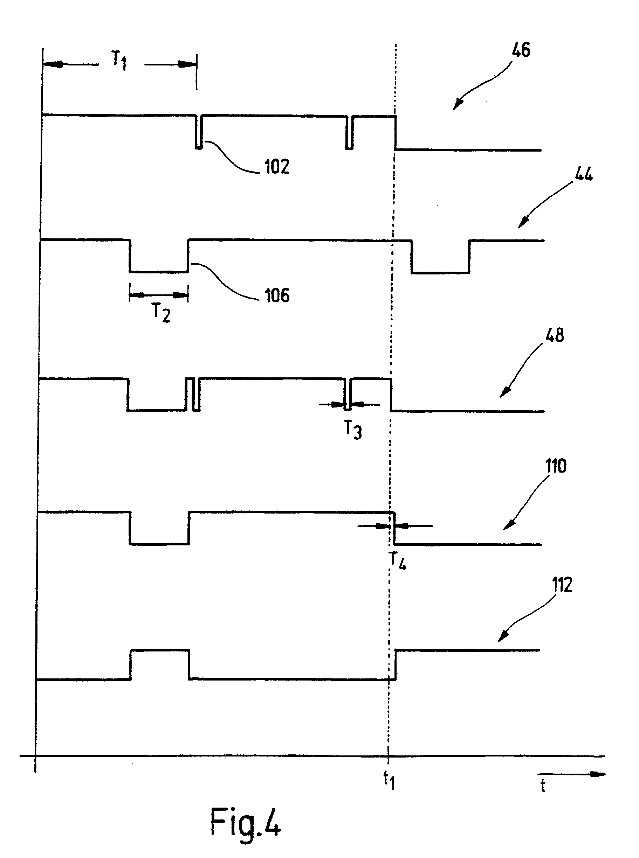

Über die Anschlußklemme 40 ist die Eingangsstufe 16 mit dem Meldegerät 14 verbunden und sie erhält hierüber ein definiertes Ausgangssignal 46, dessen jeweiliger Signalzustand von einem Betriebszustand der Maschinenanlage 22 abhängt. Im vorliegenden Ausführungsbeispiel ist das Ausgangssignal 46 ein digitales Signal, und es besitzt einen High-Pegel, wenn die Lichtschranke nicht unterbrochen ist, und einen Low-Pegel, wenn die Lichtschranke unterbrochen ist. Darüber hinaus weist das Ausgangssignal 46 kurzzeitige Ausschaltimpulse auf, was nachfolgend anhand Fig. 4 näher erläutert wird.

Über die Anschlußklemmen 36 und 42 ist die Eingangsstufe 16 ferner mit dem Verstärker 32 verbunden. Über diese Verbindung überträgt die Eingangsstufe 16 ein moduliertes Ausgangssignal 48, das sich aus der nachfolgend erläuterten Verknüpfung des periodischen Taktsignals 44 mit dem definierten Ausgangssignal 46 ergibt. Das modulierte Ausgangssignal 48 wird anschließend von der Auswerte- und Abschalteinheit 24 ausgewertet und in Abhängigkeit davon schaltet die Auswerte- und Abschalteinheit 24 gegebenenfalls die Stromversorgung der Maschinenanlage 22 ab.

Darüber hinaus kann die Auswerte- und Abschalteinheit 24 anhand des modulierten Ausgangssignals 48 einen eigenständigen Funktionstest des Sicherheitsschaltgerätes 12 durchführen. Wenn hierbei ein Fehler oder ein undefinierter Zustand erkannt wird, wird die Maschinenanlage 22 ebenfalls abgeschaltet. Die Auswerte- und Abschalteinheit 24 weist zu diesem Zweck in an sich bekannter Weise sicherheitsgerichtete Einrichtungen (hier nicht dargestellt) auf.

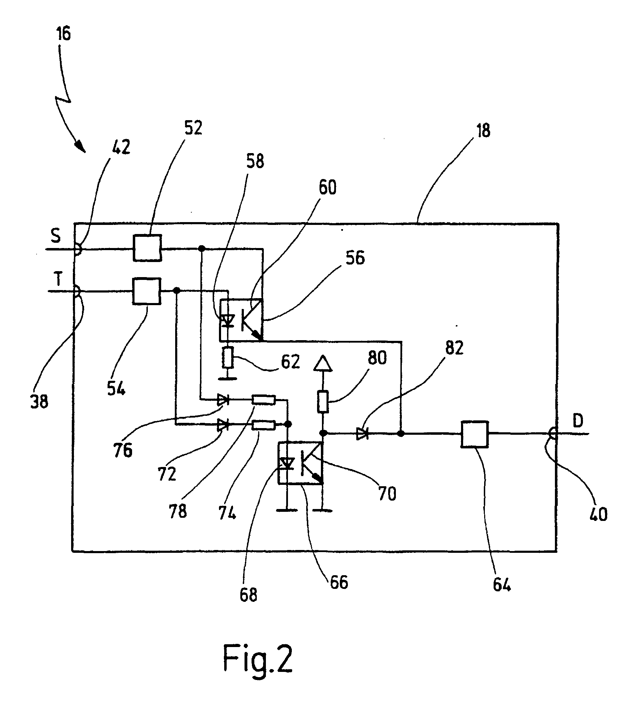

Der innere Schaltungsaufbau der Eingangsstufe 16 ist in Fig. 2 dargestellt. Dabei bezeichnen gleiche Bezugszeichen dieselben Elemente wie in Fig. 1. Zusätzlich sind das Taktsignal 44 mit dem Buchstaben T, das definierte Ausgangssignal 46 mit dem Buchstaben S und das modulierte Ausgangssignal 48 mit dem Buchstaben D abgekürzt, wie dies bei der Erläuterung von logischen Verknüpfungen üblich ist.

Das Taktsignal T und das definierte Ausgangssignal S werden in der Eingangsstufe 16 zunächst von zwei Schaltungen 52, 54 aufgenommen, die zur Pegelanpassung, Impulsformung, Filterung etc. dienen. Die Schaltungen 52, 54 sind optional und den jeweiligen Erfordernissen in an sich bekannter Weise anzupassen. Im Anschluß daran sind das Taktsignal T und das definierte Ausgangssignal S einem Optokoppler 56 zugeführt, wobei das Taktsignal T eine eingangsseitige Leuchtdiode 58 ansteuert, während das definierte Ausgangssignal S auf den Kollektor eines lichtempfindlichen Transistors 60 geführt ist. Der kathodenseitige Anschluß der Leuchtdiode 58 ist über einen Widerstand 62 auf Masse gelegt. Der Emitteranschluß des Transistors 60 ist mit einer Schaltung 64 verbunden, die ebenso wie die Schaltungen 52, 54 zur Pegelanpassung, Impulsformung etc. dient. Am Ausgang der Schaltung 64 ergibt sich das modulierte Ausgangssignal D.

Mit der Bezugsziffer 66 ist ein zweiter Optokoppler mit einer eingangsseitigen Leuchtdiode 68 und einem lichtempfindlichen Transistor 70 bezeichnet. Der kathodenseitige Anschluß der Leuchtdiode 68 liegt auf Masse. Der anodenseitige Anschluß der Leuchtdiode 68 ist mit zwei parallel zueinander angeordneten Serienschaltungen aus jeweils einer Diode und einem Widerstand verbunden. Über die eine der beiden Serienschaltungen, bestehend aus der Diode 72 und dem Widerstand 74, ist der Leuchtdiode 68 das Taktsignal T zugeführt. Über die zweite der beiden Serienschaltungen, bestehend aus der Diode 76 und dem Widerstand 78, ist der Leuchtdiode 68 das definierte Ausgangssignal S zugeführt.

Der emitterseitige Anschluß des Transistors 70 des Optokopplers 66 liegt wiederum auf Masse. Kollektorseitig ist der Transistor 70 über einen Widerstand 80 an die Versorgungsspannung angeschlossen. Des weiteren ist der Kollektor des Transistors 70 über eine in Durchlaßrichtung geschaltete Diode 82 mit dem Emitter des Transistors 60 des Optokopplers 56 verbunden.

Insgesamt realisiert die Eingangsstufe 16 hier eine fehlersichere Äquivalenz-Verknüpfung, d.h. die Signale S, T und D sind gemäß der folgenden Wahrheitstabelle logisch miteinander verbunden:

| S | T | D |
|---|---|---|
| 0 | 0 | 1 |
| 0 | 1 | 0 |
| 1 | 0 | 0 |
| 1 | 1 | 1 |

Die Funktionsweise der Eingangsstufe 16 ist wie folgt:

Wenn das Taktsignal T einen High-Pegel aufweist, ist der Transistor 60 des Optokopplers 56 über die Leuchtdiode 58 leitend geschaltet. Ebenso ist der Transistor 70 des Optokopplers 66 über die Leuchtdiode 68 leitend geschaltet. Infolgedessen wird das definierte Ausgangssignal S über den Transistor 60 des Optokopplers 56 auf die Ausgangsklemme 40 der Eingangsstufe 16 durchgeschaltet, wobei über den Pull-up-Widerstand 80 ein stabiler Signalpegel gewährleistet wird. Bei einem High-Pegel des Taktsignals T ist der Signalpegel des modulierten Ausgangssignals D daher mit dem Signalpegel des definierten Ausgangssignals S identisch.

Wenn das Taktsignal T hingegen einen Low-Pegel aufweist, sperrt der Transistor 60 des Optokopplers 56, so daß das definierte Ausgangssignal S nicht direkt auf die Ausgangsklemme 40 durchgeschleift wird. Des weiteren sperrt auch der Transistor 70 des Optokopplers 66, sofern er nicht durch einen High-Pegel des definierten Ausgangssignals S leitend geschaltet wird. Wird er durch einen High-Pegel des definierten Ausgangssignals S leitend geschaltet, zieht er den Signalpegel des modulierten Ausgangssignals D gegen Masse, so daß dieses einen Low-Pegel erhält. Ist das definierte Ausgangssignal S demgegenüber in einem Low-Zustand, sperrt auch der Transistor 70 des Optokopplers 66, so daß der Signalpegel des modulierten Ausgangssignals D über den Pull-up-Widerstand 80 auf High gezogen wird. Insgesamt entspricht das modulierte Ausgangssignal D in diesem Fall daher dem invertierten Ausgangssignal S.

Allgemein läßt sich sagen, daß das modulierte Ausgangssignal D gleich dem Taktsignal T ist, wenn das definierte Ausgangssignal S einen High-Pegel aufweist, während es bei eine Low-Pegel des definierten Ausgangssignals S zu dem periodischen Taktsignal T invertiert ist. Dies entspricht genau der Äquivalenz-Verknüpfung, wie sie in der obigen Tabelle dargestellt ist.

Das modulierte Ausgangssignal D weist somit periodisch wechselnde Signalpegel auf, mit denen die Auswerte- und Abschalteinheit 24 des Sicherheitsschaltgerätes 12 einen internen Funktionstest durchführen kann. Gleichzeitig läßt das modulierte Ausgangssignal D jedoch stets auch einen Rückschluß auf den aktuellen Signalpegel des definierten Ausgangssignals S zu. Das Sicherheitsschaltgerät 12 kann daher zu jeder Zeit auf eine Unterbrechung der Lichtschranke 14 reagieren.

Darüber hinaus ist die vorliegende Äquivalenz-Verknüpfung der Eingangsstufe 16 jedoch auch fehlersicher gegenüber sämtlichen denkbaren Kurzschlüssen oder Signalunterbrechungen. Befindet sich das definierte Ausgangssignal S beispielsweise auf einem High-Pegel, bewirkt sowohl ein Kurzschluß als auch eine Unterbrechung der Leuchtdiode 58 ein Ausschalten des Transistors 60, was einen permanenten Low-Pegel des modulierten Ausgangssignals D zur Folge hat. Eine Unterbrechung des Transistors 60 besitzt dieselbe Wirkung. Ein Kurzschluß des Transistors 60, beispielsweise infolge eines Durchlegierens, führt zu einem kontinuierlichen High-Pegel des modulierten Ausgangssignals D. In allen Fällen weist das modulierte Ausgangssignal D im Gegensatz zum Normalbetrieb keine Taktimpulse mehr auf, was in der nachgeschalteten Auswerte- und Abschalteinheit 24 als Fehler oder Abschaltbefehl erkannt werden kann.

Eine Unterbrechung der Diode 76 oder des Widerstandes 78 führt bei einem Low-Pegel des Taktsignals T zu einem Abschalten des Transistors 70 des Optokopplers 66. Infolgedessen führt das modulierte Ausgangssignal D wiederum einen permanenten High-Pegel, was als Fehler oder Abschaltbefehl erkannt werden kann.

Auch ein Kurzschluß der Diode 76 in Verbindung mit einer Unterbrechung der Leuchtdiode 68 kann erkannt werden, da in diesem Fall der Transistor 70 des Optokopplers 66 wiederum abgeschaltet ist, was zu einem permanenten High-Pegel des modulierten Ausgangssignals D führt. Auf diese Weise ist auch eine ansonsten mögliche, direkte Überkopplung des periodischen Taktsignals T auf die Ausgangsklemme 40 über die Signalstrecke Diode 72, Widerstand 74, Widerstand 78 und Transistor 60 erkennbar. Weiterhin ist aufgrund der Verwendung des Optokopplers 56 auszuschließen, daß das Taktsignal T unmittelbar auf die Ausgangsklemme 40 übergekoppelt wird.

Eine vergleichbare Fehlerbetrachtung ergibt sich bei einem Low-Pegel des definierten Ausgangssignals S, d.h. auch in diesem Fall können sämtliche auftretenden Kurzschlüsse oder Unterbrechungen erkannt werden, da sie zu einem statischen Verhalten des modulierten Ausgangssignals D führen. Die Eingangsstufe 16 ist daher fehlersicher aufgebaut.

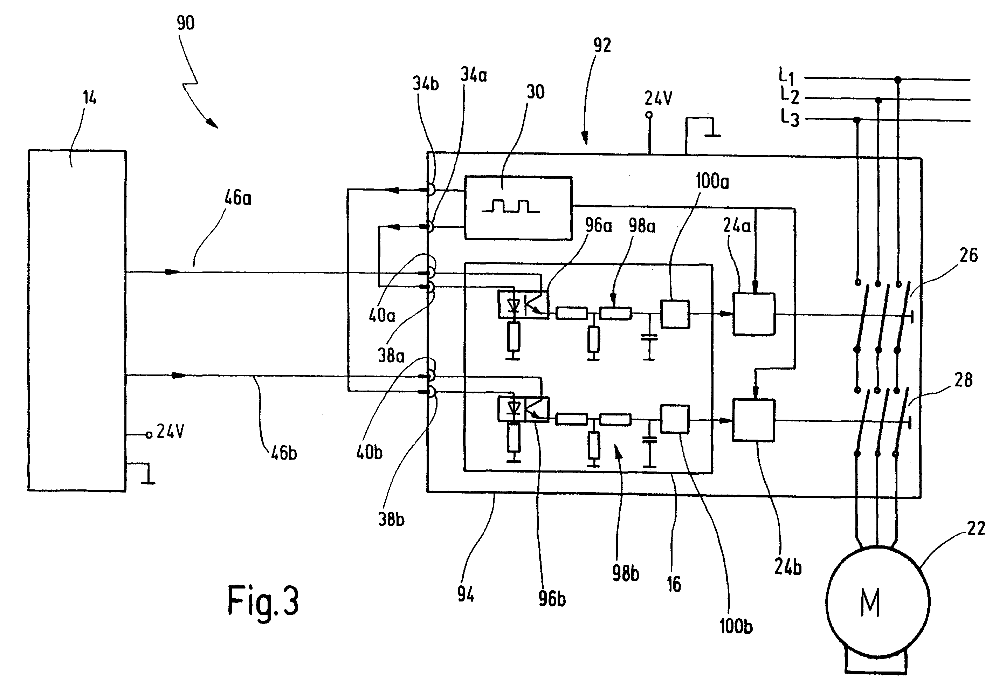

In Fig. 3 ist ein zweites Ausführungsbeispiel einer erfindungsgemäßen Schaltungsanordnung in seiner Gesamtheit mit der Bezugsziffer 90 bezeichnet. Gleiche Bezugszeichen bezeichnen dabei wiederum dieselben Elemente wie in Fig. 1. Die Schaltungsanordnung 90 ist einschließlich des Meldegerätes 14 durchgehend zweikanalig aufgebaut. Zur Unterscheidung der beiden Kanäle voneinander sind den jeweils gleichen Bezugszeichen die Buchstaben "a" und "b" hinzugefügt.

Bei der Schaltungsanordnung 90 ist das Sicherheitsschaltgerät 92 vollständig in einem Gehäuse 94 angeordnet. Die Eingangsstufe 16 des Sicherheitsschaltgerätes 92 ist hier daher fest in das Sicherheitsschaltgerät 92 integriert.

Das periodische Taktsignal T aus dem Taktgenerator 30 und das definierte Ausgangssignal S aus dem Meldegerät 14 sind in der Eingangsstufe 16 wiederum über einen Optokoppler 96 miteinander verknüpft. Dabei steuert das periodische Taktsignal T wiederum eine eingangsseitige Leuchtdiode, während das definierte Ausgangssignal S über die Kollektor-Emitterstrecke eines lichtempfindlichen Transistors geführt ist. Im Unterschied zu dem vorherigen Ausführungsbeispiel ist hier jedoch keine weitere Beschaltung vorhanden, mit der die logische Verknüpfung beeinflußt wird, so daß sich hier eine logische UND-Verknüpfung ergibt. Es versteht sich jedoch, daß die Eingangsstufe 16 dieses Ausführungsbeispiels alternativ auch eine Äquivalenz- oder eine Antivalenz-Verknüpfung beinhalten kann.

Dem Optokoppler 96 ist in jedem der beiden Kanäle eine Filterschaltung 98 nachgeschaltet, die derart dimensioniert ist, daß Impulse mit einer kürzeren Zeitdauer als der kürzesten Pulsdauer des periodischen Taktsignals T unterdrückt werden. Die Auswirkung der Filterschaltung 98 wird anhand der Zeitdiagramme in Fig. 4 deutlich.

Mit den Bezugsziffern 100a, 100b sind zwei Inverter mit einem Schmitt-Trigger-Eingang bezeichnet, mit denen das gefilterte modulierte Ausgangssignal invertiert wird. Hierdurch läßt sich das modulierte Ausgangssignal D stets von dem periodischen Taktsignal T unterscheiden, so daß ein fehlerhafter Querschluß zwischen beiden Signalen in der Auswerte- und Abschalteinheit 24 erkannt werden kann.

Eine Besonderheit des Sicherheitsschaltgerätes 92 ist, daß das periodische Taktsignal T aus dem Taktgenerator 30 zunächst über die Ausgangsklemmen 34a, 34b aus dem Gehäuse 94 herausgeführt ist und sodann über eine Schleifenverbindung und die Eingangsklemmen 38a, 38b der Eingangsstufe 16 zugeführt ist. Grundsätzlich ist es abweichend hiervon auch möglich, das Taktsignal T der Eingangsstufe 16 innerhalb des Gehäuses 94 zuzuführen. Bei der vorliegenden Ausführung ist es demgegenüber jedoch leicht möglich, auch ein kontaktbehaftetes Meldegerät an das Sicherheitsschaltgerät 92 anzuschließen. Hierzu wird das periodische Taktsignal T über den Ausgangskontakt eines solchen Meldegerätes an die Eingangsklemmen 40a, 40b geführt. An die Eingangsklemmen 38a, 38b der Eingangsstufe 16 ist dann gleichzeitig ein stationärer High-Pegel anzulegen.

Die Funktionsweise der Schaltungsanordnung 90 ergibt sich aus der Darstellung der Zeitverläufe in Fig. 4. Dabei zeigt der obere Signalverlauf das definierte Ausgangssignal 46 des Meldegerätes 14. Wie zu erkennen ist, sind diesem im vorliegenden Fall kurze Testimpulse 102 überlagert, deren Zeitdauer T₃ sehr kurz ist im Vergleich zu der Zeitdauer T₁, über die das definierte Ausgangssignal 46 hinweg einen statischen Signalwert aufweist. Zum Zeitpunkt t₁ ist angenommen, daß die Lichtschranke 14 durchbrochen wird, was zur Folge hat, daß das definierte Ausgangssignal 46 zu diesem Zeitpunkt von einem High-Pegel auf einen Low-Pegel wechselt.

Als zweites ist der Signalverlauf des periodischen Taktsignals 44 dargestellt, das in gleichbleibenden Zeitintervallen Impulse mit einer Impulsdauer von T₂ aufweist. Die Impulsdauer T₂ ist deutlich länger als die Impulsdauer T₃ der Testimpulse 102. Sie ist jedoch deutlich kürzer als die Zeitdauer T₁ des definierten Ausgangssignals 46.

Als drittes ist der Zeitverlauf des modulierten Ausgangssignals 48 dargestellt, der sich aus der logischen UND-Verknüpfung der beiden Signale 46 und 44 ergibt. Zu erkennen ist, daß nach dem Unterbrechen der Lichtschranke 14 zum Zeitpunkt t₁ das modulierte Ausgangssignal 48 einen statischen Low-Pegel aufweist, was von der Auswerte- und Abschalteinheit 24 als Abschaltbefehl erkannt werden kann.

Der vierte Signalverlauf 110 zeigt das modulierte Ausgangssignal 48 am Ausgang der Filterschaltung 98, in der die kurzen Impulse 102 unterdrückt werden. Des weiteren ist die Filterverzögerungszeit T₄ der Eingangsstufe 16 des Sicherheitsschaltgerätes 92 berücksichtigt.

In dem fünften Zeitverlauf 112 ist das Signal am Ausgang der Inverter 100 dargestellt. Wie hier zu erkennen ist, unterscheidet sich dieses Signal stets von dem periodischen Taktsignal 44, so daß die Auswerte- und Abschalteinheit 24 das modulierte Ausgangssignal am Ausgang der Inverters 100 stets von dem periodischen Taktsignal 44 trennen kann. Hierdurch kann die Auswerte- und Abschalteinheit 24 einen fehlerhaften Querschluß erkennen.

## Patentansprüche

1. Schaltungsanordnung zum sicheren Abschalten einer Anlage (22), insbesondere einer Maschinenanlage, mit einem Meldegerät (14), das in Abhängigkeit von einem Betriebszustand der Anlage (22) ein definiertes Ausgangssignal (46; S) erzeugt, und mit einem Sicherheitsschaltgerät (12; 92), das in Abhängigkeit von dem definierten Ausgangssignal (46; S) die Anlage (22) fehlersicher abschaltet, wobei das definierte Ausgangssignal (46; S) im Betrieb der Anlage über eine Zeitdauer (T₁) einen statischen Signalwert aufweist, **dadurch gekennzeichnet, daß** das Sicherheitsschaltgerät (12; 92) einen Taktgenerator (30) zum Erzeugen eines Taktsignals (44; T) sowie eine Eingangsstufe (16) aufweist, die das Ausgangssignal (46; S) des Meldegerätes (14) mit dem Taktsignal (44; T) moduliert.

2. Schaltungsanordnung nach Anspruch 1, **dadurch gekennzeichnet, daß** das Sicherheitsschaltgerät (12; 92) die Anlage (22) in Abhängigkeit von dem modulierten Ausgangssignal (48; D) abschaltet.

3. Schaltungsanordnung nach Anspruch 1 oder 2, **dadurch gekennzeichnet, daß** das definierte Ausgangssignal (46; S) ein digitales Signal ist und daß die Eingangsstufe (16) eine Logikeinheit aufweist, die das definierte Ausgangssignal (46; S) mittels einer logischen Verknüpfung mit dem Taktsignal (44; T) moduliert.

4. Schaltungsanordnung nach Anspruch 3, **dadurch gekennzeichnet, daß** die logischen Verknüpfung eine Äquivalenz-Verknüpfung ist.

5. Schaltungsanordnung nach Anspruch 3, **dadurch gekennzeichnet, daß** die logischen Verknüpfung eine Antivalenz-Verknüpfung ist.

6. Schaltungsanordnung nach einem der Ansprüche 1 bis 5, **dadurch gekennzeichnet, daß** die Eingangsstufe (16) Signalverarbeitungsmittel (56, 66; 96, 100) aufweist, die das Taktsignal (44; T) und das modulierte Ausgangssignal (48; D) fehlersicher voneinander trennen.

7. Schaltungsanordnung nach Anspruch 6, **dadurch gekennzeichnet, daß** die Signalverarbeitungsmittel (56, 66; 96) das Taktsignal (44; T) und das modulierte Ausgangssignal (48; D) galvanisch voneinander trennen.

8. Schaltungsanordnung nach Anspruch 7, **dadurch gekennzeichnet, daß** Signalverarbeitungsmittel (56, 66; 96) das Taktsignal (44; T) und das modulierte Ausgangssignal (48; D) mittels eines Optokopplers galvanisch voneinander trennen.

9. Schaltungsanordnung nach einem der Ansprüche 6 bis 8, **dadurch gekennzeichnet, daß** die Signalverarbeitungsmittel (100) zumindest einen Signalparameter des modulierten Ausgangssignals (48; D) verschieden von dem Taktsignal (44; T) verändern.

10. Schaltungsanordnung nach einem der Ansprüche 1 bis 9, **dadurch gekennzeichnet, daß** das Sicherheitsschaltgerät (12; 92) ein Gehäuse (94) mit von außen zugänglichen Anschlußklemmen (34 - 42) aufweist und daß das Taktsignal (44; T) der Eingangsstufe (16) über zumindest eine der Anschlußklemmen (38) von außen zugeführt ist.

11. Schaltungsanordnung nach einem der Ansprüche 1 bis 10, **dadurch gekennzeichnet, daß** das Sicherheitsschaltgerät (12; 92) zumindest zwei voneinander trennbare Gehäusemodule (18, 20) aufweist, wobei die Eingangsstufe (16) eigenständig in einem (18) der trennbaren Gehäusemodule (18, 20) angeordnet ist.

12. Schaltungsanordnung nach einem der Ansprüche 1 bis 11, **dadurch gekennzeichnet, daß** die Eingangsstufe (16) eine Filterschaltung (98) aufweist, mit der Impulse (102) unterdrückbar sind, deren Zeitdauer (T₃) kürzer ist als eine kürzeste Pulsdauer (T₂) des Taktsignals (44; T).

13. Schaltungsanordnung nach Anspruch 12, **dadurch gekennzeichnet, daß** das definierte Ausgangssignal (46; S) den statischen Signalwert über eine Zeitdauer (T₁) aufweist, die lang ist im Vergleich mit einer Verzögerungszeit (T₄) der Filterschaltung (98).

14. Schaltungsanordnung nach einem der Ansprüche 1 bis 13, **dadurch gekennzeichnet, daß** das Taktsignal (44; T) von einer Auswerteeinheit (24) des Sicherheitsschaltgerätes (12; 92) gesteuert wird.

15. Schaltungsanordnung nach einem der Ansprüche 1 bis 14, **dadurch gekennzeichnet, daß** zumindest die Eingangsstufe (16) mehrkanalig aufgebaut ist.

16. Sicherheitsschaltgerät zur Verwendung in einer Schaltungsanordnung nach einem der Ansprüche 1 bis 15, mit zumindest einem Eingang (40) zum Anschließen eines Meldegerätes (14) und mit einer Abschalteinheit (24), die in Abhängigkeit eines von dem Meldegerät (14) erzeugten, definierten Ausgangssignals (S; 46) einen fehlersicheren Abschaltvorgang auslöst, **dadurch gekennzeichnet, daß** es einen Taktgenerator (30) zum Erzeugen eines Taktsignals (44; T) sowie eine Eingangsstufe (16) aufweist, die das Ausgangssignal (S; 46) des Meldegerätes (14) mit dem Taktsignal (44; T) moduliert.

## Claims

1. A circuit arrangement for safe disconnection of an installation (22), in particular a machine installation, having a signaling device (14) which produces a defined output signal (46; S) depending on an operating condition of the installation (22), and having a safety switching device (12; 92) which disconnects the installation (22) in a failsafe manner depending on the defined output signal (46; S), wherein the defined output signal (46; S) comprises a steady-state signal level over a period of time (T₁) during operation of the installation, **characterized in that** the safety switching device (12; 92) has a clock generator (30) for generating a clock signal (44; T), and has an input stage (16) which modulates the output signal (46; S) from the signaling device (14) with the clock signal (44; T).

2. The circuit arrangement of claim 1, **characterized in that** the safety switching device (12; 92) disconnects the installation (22) as a function of the modulated output signal (48; D).

3. The circuit arrangement of claim 1 or 2, **characterized in that** the defined output signal (46; S) is a digital signal, and the input stage (16) comprises a logic unit, which modulates the defined output signal (46; S) by means of a logic interconnection with the clock signal (44; T).

4. The circuit arrangement of claim 3, **characterized in that** the logic interconnection is an exclusive-NOR interconnection.

5. The circuit arrangement of claim 3, **characterized in that** the logic interconnection is an exclusive-OR interconnection.

6. The circuit arrangement of any of claims 1 to 5, **characterized in that** the input stage (16) comprises signal processing means (56, 66; 96, 100) which separate the clock signal (44; T) and the modulated output signal (48; D) from one another in a failsafe manner.

7. The circuit arrangement of claim 6, **characterized in that** the signal processing means (56, 66; 96) galvanically isolate the clock signal (44; T) and the modulated output signal (48; D) from one another.

8. The circuit arrangement of claim 7, **characterized in that** the signal processing means (56, 66; 96) galvanically isolate the clock signal (44; T) and the modulated output signal (48; D) from one another by means of an optocoupler.

9. The circuit arrangement of any of claims 6 to 8, **characterized in that** the signal processing means (100) change at least one signal parameter of the modulated output signal (48; D) differently from the clock signal (44; T).

10. The circuit arrangement of any of claims 1 to 9, **characterized in that** the safety switching device (12; 92) comprises a housing (94) with externally accessible connecting terminals (34 - 42), and the clock signal (44; T) is supplied to the input stage (16) from the outside via at least one of the connecting terminals (38).

11. The circuit arrangement of any of claims 1 to 10, **characterized in that** the safety switching device (12; 92) comprises at least two housing modules (18, 20) which can be separated from one another, with the input stage (16) being arranged on its own in one (18) of the separable housing modules (18, 20).

12. The circuit arrangement of any of claims 1 to 11, **characterized in that** the input stage (16) comprises a filter circuit (98) by means of which pulses (102) can be suppressed whose time period (T₃) is shorter than a shortest pulse duration (T₂) of the clock signal (44; T).

13. The circuit arrangement of claim 12, **characterized in that** the defined output signal (46; S) is at the steady-state signal level for a period of time (T₁) which is long in comparison to a delay time (T₄) of the filter circuit (98).

14. The circuit arrangement of any of claims 1 to 13, **characterized in that** the clock signal (44; T) is controlled by an evaluation unit (24) of the safety switching device (12; 92).

15. The circuit arrangement of any of claims 1 to 14, **characterized in that** at least the input stage (16) is designed in a multichannel fashion.

16. A safety switching device for use in a circuit arrangement as claimed in any of claims 1 to 15, having at least one input (40) for connecting a signaling device (14) and having a disconnection unit (24) which initiates a failsafe disconnection process depending on a defined output signal (S; 46) which is produced by the signaling device (14), **characterized in that** said safety switching device comprises a clock generator (30) for generating a clock signal (44; T), and having an input stage (16) which modulates the output signal (S; 46) of the signaling device (14) with the clock signal (44; T).

## Revendications

1. Circuit pour mettre à l'arrêt en toute sécurité une installation (22), en particulier une installation de machines, comportant un appareil de signalisation (14) qui produit un signal de sortie défini (46 ; S) en fonction d'un état de fonctionnement de l'installation (22), et comportant un appareil de coupure de sécurité (12 ; 92) qui met à l'arrêt l'installation (22) sans erreur possible en fonction du signal de sortie (46 ; S) défini, le signal de sortie défini (46 ; S) présentant pendant le fonctionnement de l'installation sur une durée (T₁) une valeur de signal statique, **caractérisé en ce que** l'appareil de coupure de sécurité (12 ; 92) comporte un générateur de rythme (30) pour produire un signal de rythme (44 ; T) ainsi qu'un étage d'entrée (16) qui module le signal de sortie (46 ; S) de l'appareil de signalisation (14) avec le signal de rythme (44 ; T).

2. Circuit selon la revendication 1, **caractérisé en ce que** l'appareil de coupure de sécurité (12 ; 92) met à l'arrêt l'installation (22) en fonction du signal de sortie modulé (48 ; D).

3. Circuit selon la revendication 1 ou 2, **caractérisé en ce que** le signal de sortie défini (46 ; S) est un signal numérique et **en ce que** l'étage d'entrée (16) comporte une unité logique qui module le signal de sortie défini (46 ; S) avec le signal de rythme (44 ; T) au moyen d'une fonction logique.

4. Circuit selon la revendication 3, **caractérisé en ce que** la fonction logique est une fonction à équivalence.

5. Circuit selon la revendication 3, **caractérisé en ce que** la fonction logique est une fonction à anticoïncidence.

6. Circuit selon l'une des revendications 1 à 5, **caractérisé en ce que** l'étage d'entrée (16) comporte des moyens de traitement de signaux (56, 66 ; 96, 100) qui séparent l'un de l'autre sans erreur possible le signal de rythme (44 ; T) et le signal de sortie modulé (48 ; D).

7. Circuit selon la revendication 6, **caractérisé en ce que** les moyens de traitement de signaux (56, 66 ; 96) séparent galvaniquement l'un de l'autre le signal de rythme (44 ; T) et le signal de sortie modulé (48 ; D).

8. Circuit selon la revendication 7, **caractérisé en ce que** des moyens de traitement de signaux (56, 66 ; 96) séparent galvaniquement l'un de l'autre le signal de rythme (44 ; T) et le signal de sortie modulé (48 ; D) au moyen d'un coupleur optique.

9. Circuit selon l'une des revendications 6 à 8, **caractérisé en ce que** les moyens de traitement de signaux (100) font varier au moins un paramètre du signal de sortie modulé (48 ; D) autrement que le signal de rythme (44 ; T).

10. Circuit selon l'une des revendications 1 à 9, **caractérisé en ce que** l'appareil de coupure de sécurité (12 ; 92) comporte un boîtier (94) avec des bornes de connexion (34-42) accessibles de l'extérieur et **en ce que** le signal de rythme (44 ; T) de l'étage d'entrée (16) est amené de l'extérieur par au moins l'une des bornes de connexion (38).

11. Circuit selon l'une des revendications 1 à 10, **caractérisé en ce que** l'appareil de coupure de sécurité (12; 92) comporte au moins deux modules de boîtier (18, 20) pouvant être séparés l'un de l'autre, l'étage d'entrée (16) étant disposé de manière autonome dans l'un (18) des modules de boîtier (18, 20) séparables.

12. Circuit selon l'une des revendications 1 à 11, **caractérisé en ce que** l'étage d'entrée (16) comporte un circuit de filtrage (98) au moyen duquel on peut supprimer des impulsions (102) dont la durée (T₃) est inférieure à une durée d'impulsions (T₂) la plus courte du signal de rythme (44 ; T).

13. Circuit selon la revendication 12, **caractérisé en ce que** le signal de sortie défini (46 ; S) possède la valeur de signal statique sur une durée (T₁) qui est longue par rapport à une durée de temporisation (T₄) du circuit de filtrage (98).

14. Circuit selon l'une des revendications 1 à 13, **caractérisé en ce que** le signal de rythme (44 ; T) est commandé par une unité d'exploitation (24) de l'appareil de coupure de sécurité (12 ; 92).

15. Circuit selon l'une des revendications 1 à 14, **caractérisé en ce qu'**au moins l'étage d'entrée (16) est d'une conception à plusieurs canaux.

16. Appareil de coupure de sécurité destiné à être utilisé dans un circuit selon l'une des revendications 1 à 15, comportant au moins une entrée (40) pour le raccordement d'un appareil de signalisation (14) et comportant une unité de coupure (24) qui déclenche une coupure sans erreur possible en fonction d'un signal de sortie défini (S ; 46) produit par l'appareil de signalisation (14), **caractérisé en ce qu'**il comporte un générateur de rythme (30) pour produire un signal de rythme (44 ; T) ainsi qu'un étage d'entrée (16) qui module le signal de sortie (S ; 46) de l'appareil de signalisation (14) avec le signal de rythme (44 ; T).
